(19) Europäisches Patentamt / European Patent Office / Office européen des brevets

(11) **EP 4 336 178 A1**

(12) **EUROPÄISCHE PATENTANMELDUNG**

(43) Veröffentlichungstag:
13.03.2024 Patentblatt 2024/11

(21) Anmeldenummer: 23190037.4

(22) Anmeldetag: 07.08.2023

(51) Internationale Patentklassifikation (IPC):
*G01N 29/22* (2006.01)   *G01N 29/12* (2006.01)
*G01N 29/24* (2006.01)   *G01N 29/46* (2006.01)
*G01N 29/44* (2006.01)   *G01N 29/34* (2006.01)

(52) Gemeinsame Patentklassifikation (CPC):
**G01N 29/12; G01N 29/228; G01N 29/2437;
G01N 29/348; G01N 29/4436; G01N 29/46;**
G01N 2291/0232; G01N 2291/0289;
G01N 2291/102

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: 06.09.2022 DE 102022209243

(71) Anmelder: **Aktiebolaget SKF
415 50 Göteborg (SE)**

(72) Erfinder: **Strobl, Stefan
4400 Garsten (AT)**

(74) Vertreter: **Kuhstrebe, Jochen
SKF GmbH
Gunnar-Wester-Straße 12
97421 Schweinfurt (DE)**

(54) **VERFAHREN ZUR BESTIMMUNG, OB FEHLAUSBILDUNGEN IM MATERIAL EINER KERAMISCHEN KOMPONENTE VORHANDEN SIND**

(57)     Offenbart wird ein Verfahren (1) zur Bestimmung, ob Fehlausbildungen im Material einer keramischen Komponente (2) vorhanden sind, wobei das Verfahren die folgenden Schritte aufweist:
Ermitteln (S1) einer Temperaturdifferenz zwischen einer ersten Temperatur und einer zweiten Temperatur auf Basis eines Einsatzzwecks der Komponente (2),
Temperieren (S2) der Komponente (2) auf eine erste Temperatur;
Temperieren (S3) der Komponente (2) auf eine zweite Temperatur;
Durchführen (S4) einer Resonanz-Ultraschallspektroskopie der Komponente (2) nach dem Temperieren auf die zweite Temperatur,
Erfassen(S5) eines Ultraschallspektrums der Komponente (2),
Auswerten (S6) des erfassten Ultraschallspektrums,
Vergleichen (S7) des ausgewerteten Ultraschallspektrums mit einem Referenzspektrum, und
Bestimmen (S8) aus dem Vergleich, ob Fehlausbildungen im Material der Komponente (2) vorhanden sind.

Fig. 1

**Beschreibung**

Vorliegende Erfindung betrifft ein Verfahren zur Bestimmung, ob Fehlausbildungen im Material einer keramischen Komponente vorhanden sind.

Keramische Komponenten werden in einer Vielzahl von Anwendungen eingesetzt, beispielsweise in Wälzlagern, Gleitlagern, Walzen, als Schneidelement, als Implantat oder dergleichen. Oft wirken auf die Komponenten hohe mechanische Belastungen oder Temperaturen, beispielsweise an der Oberfläche.

Unter Umständen kann die Komponente Fehlausbildungen im Material, wie beispielsweise Risse, Kratzer, Poren, Materialeinschlüsse und/oder fehlendes Material, an der Oberfläche, aber auch in anderen Bereichen, aufweisen. Diese Fehlausbildungen können aus unterschiedlichen Gründen vorhanden sein, beispielsweise bei einer Herstellung, einer Nachbearbeitung, wie Schleifen, Honen oder dergleichen entstanden sein. Durch Spannungen können die Fehlausbildungen dazu führen, dass die keramische Komponente versagt. Die Fehlausbildung kann unter einer Belastung wachsen und daher zu einem unerwünschten Materialversagen führen.

Um dies zu verhindern, gibt es konventionelle Prüfverfahren, mit denen fehlerhafte Bauteile aussortiert werden sollen. Beispielsweise werden die Bauteile dazu einer Thermoschockbehandlung unterzogen. Dazu werden die keramischen Bauteile innerhalb einer kurzen Zeit einer schnellen Abkühlung ausgesetzt, um fehlerhafte Bauteile gezielt zum Ausfall zu bringen. Eine Detektion von auftretenden Oberflächenrissen erfolgt während eines Abkühlens akustisch und/oder optisch. Wird ein Wachsen eines Risses detektiert, wird das Bauteil ausgeschieden. Allerdings kann der Prüfversuch unter ungünstigen Umständen relativ unspezifisch sein. Es kann eventuell vorkommen, dass auch Bauteile ausgeschieden werden, die brauchbar sind, weil zwischen kritischen und nicht kritischen Rissen nicht unterschieden wird. Auch ist es möglich, dass die vorhanden Fehlausbildungen durch die Thermoschockbehandlung nicht zu oberflächlichen Rissen führen, die zu einer akustischen Veränderung führen, so dass die fehlerhaften Komponenten nicht aussortiert werden.

Es ist deshalb Aufgabe vorliegender Erfindung, ein verbessertes Verfahren bereitzustellen, um zu bestimmen, ob Fehlausbildungen im Material einer keramischen Komponente vorhanden sind.

Diese Aufgabe wird durch das Verfahren gemäß Patentanspruch 1 gelöst.

Im Folgenden wird ein Verfahren zur Bestimmung, ob Fehlausbildungen im Material einer keramischen Komponente vorhanden sind, vorgeschlagen, wobei das Verfahren die folgenden Schritte aufweist:

Ermitteln einer Temperaturdifferenz zwischen einer ersten Temperatur und einer zweiten Temperatur auf Basis eines Einsatzzwecks der Komponente,
Temperieren der Komponente auf eine erste Temperatur;
Temperieren der Komponente auf eine zweite Temperatur;
Durchführen einer Resonanz-Ultraschallspektroskopie der Komponente nach dem Temperieren auf die zweite Temperatur,
Erfassen eines Ultraschallspektrums der Komponente,
Auswerten des erfassten Ultraschallspektrums,
Vergleichen des ausgewerteten Ultraschallspektrums mit einem Referenzspektrum, und
Bestimmen aus dem Vergleich, ob Fehlausbildungen im Material der Komponente vorhanden sind.

Die Resonanz-Ultraschallspektroskopie (RUS) ist eine Technik, mit der grundlegender Materialeigenschaften, die die elastischen Eigenschaften betreffen, gemessen werden können. Diese Technik beruht auf der Tatsache, dass Festkörper Eigenfrequenzen haben, bei denen sie schwingen, wenn sie mechanisch angeregt werden. Die Eigenfrequenz hängt unter anderem von der einer Dichte und einem Elastizitätsmodul des verwendeten Materials sowie der Größe, der Form und der Masse des Objekts ab. Die Resonanz-Ultraschallspektroskopie nutzt diese Eigenschaft von Festkörpern zur Bestimmung des elastischen Tensors des Materials. Vorteilhafterweise kann dabei der gesamte elastische Tensor einer Probe in einer einzigen schnellen Messung ermittelt werden kann. Bei einer Resonanz-Ultraschallspektroskopie wird üblicherweise die zu untersuchende Komponente zwischen eine Ultraschallwellen erzeugende Vorrichtung, die dazu ausgebildet ist, eine elastische Welle mit variierender Frequenz zu erzeugen, und eine Ultraschallwellen detektierende Vorrichtung gehalten, die dazu ausgebildet ist, die Resonanzen der untersuchten Komponente zu erfassen. Als Ultraschallwellen erzeugende Vorrichtung kann beispielsweise ein piezoelektrischer Wandler verwendet werden. Außerdem kann als Ultraschallwellen detektierende Vorrichtung beispielsweise ein piezoelektrischer Wandler und/oder ein Laser eingesetzt werden. Beispielsweise kann die Resonanz-Ultraschallspektroskopie bei dem oben genannten Verfahren in einem Frequenzbereich zwischen 100kHZ und 100MHz durchgeführt werden. Während ein Frequenzbereich durchlaufen wird, wird eine Folge von Resonanzspitzen aufgezeichnet. Die Position dieser Spitzen liegt bei den Eigenfrequenzen der Komponente, wobei die elastischen Konstanten aus den Eigenfrequenzen bestimmt werden können.

Da sich sowohl oberflächliche als auch tieferliegende Fehlausbildungen im Material der Komponente auf die Eigenfrequenzen der Komponente auswirken, kann vorteilhafterweise neben oberflächlichen Rissen auch im Material der Komponente liegende Fehlausbildungen erfasst werden. Dabei können die Fehlausbildungen im Material Poren, Materialeinschlüsse, Agglomerate und/oder Risse sein. Diese Fehlausbildungen können beim Temperieren der Komponente entstanden oder aber auch schon vor dem Temperieren vorhanden gewesen sein.

Bei dem Vergleich kann insbesondere überprüft werden, ob das erfasste Ultraschallspektrum der Komponente dem Referenzspektrum entspricht, d.h. die ermittelten Eigenfrequenzen der Komponente stimmen mit den Frequenzen des Referenzspektrums überein. In diesem Fall kann angenommen werden, dass keine Fehlausbildungen im Material der Komponente vorliegen. Wird dagegen festgestellt, dass die Eigenfrequenzen der Komponente im Vergleich zum Referenzspektrum verschoben sind und/oder signifikant verändert sind, kann davon ausgegangen werden, dass Fehlausbildungen im Material der Komponente vorliegen, die zu einer Veränderung der Eigenfrequenzen der Komponente führen.

Im Folgenden wird unter dem Begriff "Pore" ein klar abgegrenzter Hohlraum in der Oberfläche verstanden, wobei eine Tiefe, Position, Form und/oder Größe variieren kann. Poren können insbesondere isoliert oder in Clustern auftreten.

Des Weiteren wird unter dem Begriff "Materialeinschluss" ein exogenes oder endogenes Material verstanden, das in der Komponente erfasst wird. Dabei ist ein endogener Materialeinschluss eine Heterogenität einer intergranularen Phase, die abhängig von der Art der Heterogenität eine unterschiedliche Erscheinung aufweist. Insbesondere kann die Art der Heterogenität eine keramische zweite Phase, eine hohe Dichte von spezifischen Additiven oder eine geringe Dichte von spezifischen Additiven sein, wobei unter einer keramischen zweiten Phase eine inhomogen verteilte Phase verstanden wird, die teilweise aus einer Glasphase bestehen kann. Weiterhin kann eine Tiefe, Position, Form und/oder Größe des Materialeinschlusses variieren. Materialeinschlüsse können insbesondere isoliert oder in Clustern auftreten.

Bei dem Temperieren kann es sich beispielsweise um ein Erwärmen oder ein Abkühlen der Komponente handeln. Unter Umständen kann die zweite Temperatur kleiner sein als die erste Temperatur. Das Temperieren kann beispielsweise in einem Gas zum Beispiel in Luft, beispielsweise in einem Ofen und/oder in einer Flüssigkeit, beispielsweise in einem Bad, aber auch mit Strahlung, beispielsweise mit einem Laser erfolgen. Eventuell kann es sich bei dem ersten Temperieren um ein Erwärmen handeln, das in einem Ofen ausgeführt wird und bei dem zweiten Temperieren um ein Abkühlen, das in einem Flüssigkeitsbad, beispielsweise in Wasser oder in Öl ausgeführt wird. Ein Temperieren, beispielsweise ein Erwärmen, aber auch ein Abkühlen kann dabei unter beliebig einstellbarer Atmosphäre, aber auch unter Vakuum erfolgen.

Weiterhin kann das Temperieren auf die erste Temperatur und das Temperieren auf die zweite Temperatur in Form einer Thermoschockbehandlung erfolgen. Unter einer Thermoschockbehandlung wird zum Beispiel eine spontane, also in kurzer Zeit erfolgende Temperaturerhöhung oder Abkühlung eines keramischen Bauteils verstanden. Eine kurze Zeitdauer kann beispielsweise kürzer sein als 1 Stunde, 50 min oder 30 min dauern. Vorzugsweise erfolgt die Thermoschockbehandlung im Bereich von 0,01 bis 100 Sekunden.

Bei der keramischen Komponente kann es sich um alle möglichen Bauteile handeln, die zumindest teilweise einen keramischen Werkstoff umfassen oder aus diesem hergestellt sind, beispielsweise ein Implantat für einen menschlichen oder tierischen Körper, zum Beispiel ein Gelenk, eine Knochenschraube, eine Zahnprothese, eine Zahnbrücke oder dergleichen. Des Weiteren kann es sich bei der Komponente um eine Lagerkomponente, für ein Wälz- oder ein Gleitlager handeln, beispielsweise einen Lagerring oder einen Wälzkörper bzw. im Allgemeinen für Wälz-, Roll- und Gleitanwendungen geeignet sein. Darüber hinaus kann auch die Komponenten zum Beispiel ein Ventil, ein Düsenkörper, ein Werkzeugteil, ein Schneidelement, eine keramische Leiterplatte, eine funktionelle Komponente oder dergleichen sein. Manche der Komponenten können dabei auch metallische oder organische Materialien enthalten. Bei allen diesen Bauteilen kann ein Versagen unerwünscht sein und zu erheblichen Nacharbeiten und gegebenenfalls Operationen führen.

Ferner kann die keramische Komponente als Werkstoff $Si_3N_4$ (Siliziumnitrid), SiAlON (Silizium-Aluminium-Oxy-Nitrid), SiC (Siliciumcarbid), $Al_2O_3$ (Aluminiumoxid), $ZrO_2$ (Zirconiumoxid), ZTA (Zirkoniumoxidverstärktes Aluminiumoxid), ATZ (aluminiumoxidverstärktes Zirkonoxid) oder dergleichen und/oder deren Mischungen umfassen. Unter Umständen kann wenigstens einer dieser Werkstoffe wenigstens 50 Gewichts% eines Gesamtgewichts der Komponente ausmachen. Eventuell kann die Komponente auch vollständig aus einem dieser Werkstoffe hergestellt sein.

Je nach Einsatzzweck kann es notwendig sein, dass die Komponente eine gewisse Widerstandsfähigkeit, Zähigkeit, Festigkeit und/oder maximale Fehlstellengröße aufweisen sollte, um den Einsatzzweck zu erfüllen. Um dies sicherzustellen kann erste Temperatur, auf die die Komponente temperiert wird, die zweite Temperatur, auf die die Komponente temperiert wird, und/oder die Temperaturdifferenz derart gewählt werden, dass eine ausreichend große thermische Belastung in der Komponente erzeugt wird. Bevorzugt umfasst das Verfahren ferner ein Bestimmen der Temperaturdifferenz auf Basis einer minimalen Risszähigkeit. Bei der minimalen Risszähigkeit kann es sich beispielsweise um einen von einem Benutzer oder Anwender vorgegebenen Wert handeln, den die Komponente aufweisen soll, um den Einsatzzweck zu erfüllen. Eine minimale Risszähigkeit kann dabei beispielsweise basierend auf Erfahrungswerten, Versuchen oder dergleichen bestimmt werden. Eine minimale geforderte Risszähigkeit kann beispielsweise wenigstens 4.0 MPa m$^{1/2}$ betragen.

Die Temperaturdifferenz kann beispielsweise ausgehend von dem Griffith/ Irwin-Kriterium bestimmt werden:

$$K \geq K_c \text{ mit } K = \sigma_{Ref} \, Y \, \sqrt{a\pi} \qquad (1)$$

K steht dabei für den Spannungsintensitätsfaktor. $K_c$ stellt den kritischen Spannungsintensitätsfaktor bzw. die Risszähigkeit dar. $\sigma_{Ref}$ steht für eine Referenzspannung in einer Probe ohne Riss. a steht für die Größe des Risses und Y stellt einen geometrischen Faktor dar, mit welchem die Geometrie des Risses, des Spannungsfeldes und des Probenkörpers berücksichtigt wird.

Die thermisch induzierte Spannung $\sigma_{th}$ bzw. deren Maximalwert $\sigma_{th,max}$ an einer unter Zugspannung stehenden Oberfläche kann allgemein mit der folgenden Gleichung dargestellt werden:

$$\sigma_{th,max} = \hat{\sigma}^*_{th} \frac{\alpha E}{1-v} \Delta T \qquad (2)$$

$\alpha$ ist der lineare thermische Ausdehnungskoeffizient, E steht für den E-Modul, v für das Poisson-Verhältnis und $\Delta T$ für die Temperaturdifferenz bei der Thermoschockbehandlung. Der dimensionslose Faktor $\hat{\sigma}^*_{th}$ bezieht sich auf die Biotzahl, die aus der Bauteilgeometrie, der Wärmeleitfähigkeit und dem Wärmeübergang ermittelt werden kann. Dieser Faktor liegt zwischen dem Wert 0 bei sehr sanftem Abkühlen und dem Wert 1 für einen sehr schnellen Abschreckprozess.

Der Spannungsintensitätsfaktor K lässt sich für den konkreten Versuch bei Vorliegen eines Risses mit der Länge a wie folgt darstellen:

$$K = \Delta T_c \frac{\alpha_{eff} E}{1-v} \sigma^*_{th,max} Y_{max} \sqrt{a\pi} \qquad (3)$$

$Y_{max}$ ist dabei das Maximum des Geometriefaktors Y in einem bestimmten Punkt des Risses. Dieser ist von der Rissform und Position abhängig und kann durch eine Parameterstudie bestimmt werden. Zur Verlängerung eines Risses bzw. eines Defektes kommt es dann, wenn am Ort des Risses bzw. Defektes entsprechend Gleichung (3) die Risszähigkeit $K_c$ des Materials erreicht wird. Durch Umformulierung der vorstehenden Gleichung (3) ergibt sich für idealisierte Bedingungen wie temperaturunabhängige Werkstoffparameter und geringe Spannungsänderungen über den Rissverlauf, dass eine bestimmte kritische Rissgröße bei vorgegebener Probengeometrie und geforderter Risszähigkeit einer bestimmten kritischen Temperaturdifferenz $\Delta T_c$ bei der Thermoschockbehandlung entspricht. Unter nicht idealisierten Bedingungen lässt sich diese Temperaturdifferenz numerisch berechnen. Wird die Temperaturdifferenz entsprechend eingestellt, kann bei manchen Ausführungsbeispielen sichergestellt werden, dass alle Komponenten, die der Thermoschockbehandlung mit der gegebenen Temperaturdifferenz standhalten, für den Einsatz im Betrieb geeignet sind bzw. die minimale geforderte Risszähigkeit aufweisen. Komponenten, bei denen bei der Prüfung Risse auftreten, die einen Grenzwert überschreiten, können aussortiert werden.

Ergänzend oder alternativ kann unter Berücksichtigung der bauteilspezifischen und systematischen Fehler für die Bestimmung der Risszähigkeit an Wälzlagerkugeln aus Siliciumnitrid der abgeschätzte Messfehler für die ermittelte Risszähigkeit maximal im Bereich von +-10 % liegen. Bei manchen Ausführungsbeispielen können die mit dem Verfahren geprüften Komponenten eine ausreichende Sicherheit gegen Versagen aufweisen.

Ergänzend oder alternativ kann ein Wert für die Risszähigkeit aus einer Tabelle entnommen und/oder experimentell ermittelt werden. Um eine Risszähigkeit experimentell zu ermitteln, kann beispielsweise eine Risszähigkeit an einer sogenannten Probenkomponente mit dem folgenden Verfahren ermittelt werden. Beispielsweise kann die Probenkomponente dieselben Form, Größen und Materialeigenschaften wie die keramische Komponente aufweisen.

Hierfür wird ein semi-elliptischer Oberflächenriss mit beispielsweise einem Knoop Indenter zwecks guter Reproduzierbarkeit der Rissgeometrie eingebracht. In untenstehender Tabelle wurde an Siliciumnitrid Wälzlagerkugeln mit verschiedenem Durchmesser D ein Knoop Indent mit der Last 10 und 7 kg eingebracht (HK10, HK7). Der an der Bauteiloberfläche plastisch verformte Werkstoff wird vorzugsweise durch Abtragen einer dünnen Oberflächenschicht entfernt, um den Einfluss von eingebrachten Eigenspannungen auf das Messergebnis gering zu halten. Die abgetragene Schicht sollte zumindest 1/6 der längeren Diagonale des Knoop Indents betragen. Durch Einbringen einer spezifischen Temperaturdifferenz $\Delta T$ im Thermoschockexperiment erhält man eine Risszähigkeit $K_{surv}$, wo gerade noch kein Risswachstum erkennbar ist. Bei weiterer Erhöhung des $\Delta T$ kommt es zu Risswachstum bei der Risszähigkeit $K_{frac}$. Hier wurde die kritische Risszähigkeit $K_c$ bereits überschritten, die mit $\Delta T_c$ entsprechend Gleichung (3) korreliert. Der Wärmeübergangskoeffizient hf beim Abschrecken von Keramiken in Wasser liegt erfahrungsgemäß im Bereich von 75000

bis 100000 Wm$^{-2}$K$^{-1}$. Bi ist eine dimensionslose Biotzahl aus der Modellierung des Temperaturfelds der Kugel. Die auf diese Art und Weise ermittelte Risszähigkeit kann beispielsweis auch als gemessen Risszähigkeit bezeichnet werden.

| | h$_f$= 75000 Wm$^{-2}$K$^{-1}$ | | | h$_f$ = 100000 Wm$^{-2}$K$^{-1}$ | | |
|---|---|---|---|---|---|---|
| | Bi | K$_{surv}$ | K$_{frac}$ | Bi | K$_{surv}$ | K$_{frac}$ |
| | - | MPa m$^{1/2}$ | MPa m$^{1/2}$ | - | MPa m$^{1/2}$ | MPa m$^{1/2}$ |
| Set 1, D=12.7 mm, HK10 | 22.0 | 5.3 ± 0.3 | 5.5 ± 0.3 | 29.3 | 5.7 ± 0.3 | 5.9 ± 0.3 |
| Set 2, D=5.55 mm, HK10 | 10.2 | 5.5 ± 0.3 | 5.9 ± 0.3 | 13.7 | 6.0 ± 0.3 | 6.4 ± 0.3 |
| Set 3, D=5.55 mm, HK7 | 10.6 | 5.7 ± 0.1 | 6.0 ± 0.2 | 14.2 | 6.2 ± 0.1 | 6.5 ± 0.2 |

Gemäß einem weiteren Ausführungsbeispiel wird das Referenzspektrum basierend auf einer Geometrie und/oder Größe der Komponente und aus zumindest einer elastischen Konstante eines Materials der Komponente bestimmt. Aus den bekannten geometrischen Parametern der Komponente, wie beispielsweise Form, Durchmesser und/oder Abmessungen, und aus den elastischen Materialkonstanten können die Eigenfrequenzen der Komponente berechnet werden. Bevorzugt ist die zumindest eine elastische Konstante des Materials das Elastizitätsmodul und/oder die Poissonzahl. Vorteilhafterweise kann, indem die Bestimmung des Referenzspektrums durch eine Berechnung erfolgt, angenommen werden, dass keine Fehlausbildungen im Material vorliegen, so dass das Referenzspektrum ein Spektrum einer Komponente ohne Fehlausbildungen darstellt.

Des Weiteren kann das Auswerten des erfassten Ultraschallspektrums ein Bestimmen zumindest einer elastischen Materialkonstante der Komponente umfassen. Wie voranstehend ausgeführt, können durch die Resonanz-Ultraschallspektroskopie die Eigenfrequenzen der Komponente ermittelt werden. Diese können dann wiederum verwendet werden, um zusammen mit den bekannten geometrischen Parametern der Komponente die zumindest eine elastische Materialkonstante der Komponente zu ermitteln. Bevorzugt kann die bestimmte elastische Materialkonstante das Elastizitätsmodul und/oder die Poissonzahl sein. Insbesondere kann durch ein Abweichen der bestimmten elastischen Materialkonstante von der zu erwartenden elastischen Materialkonstante darauf geschlossen werden, dass Fehlausbildungen im Material der Komponente vorliegen.

Gemäß einer weiteren bevorzugten Ausführungsform umfasst das Verfahren ferner ein Überprüfen der Komponente auf ihre Einsatztauglichkeit, wobei die Komponente als einsatztauglich betrachtet wird, wenn Abweichungen zwischen dem erfassten Ultraschallspektrum und dem Referenzspektrum kleiner sind als ein vorgegebener Grenzwert. Insbesondere kann durch das Verfahren oder den Einsatz von Komponenten, die mit dem Verfahren geprüft wurden, zumindest die Gefahr, dass ein Versagen eintritt, reduziert werden. Bevorzugt wird die Komponente als einsatztauglich angesehen, wenn das bestimmte Elastizitätsmodul der Komponente weniger als 5%, bevorzugt weniger als 2 %, noch bevorzugter weniger als 1 %, von dem erwarteten Elastizitätsmodul abweicht. Weiterhin kann die Komponente als nicht einsatztauglich angesehene werden, wenn eine oder mehrere Resonanzspitzen im erfassten Ultraschallspektrum im Vergleich zum Referenzspektrum fehlen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:

Fig. 1: eine schematische Darstellung eines Verfahrens zur Bestimmung, ob Fehlausbildungen im Material einer keramischen Komponente vorhanden sind, gemäß einem Ausführungsbeispiel;

Fig. 2: eine schematische Darstellung einer Komponente, bei der gemäß dem Verfahren bestimmt wurde, ob Fehlausbildungen im Material einer keramischen Komponente vorhanden sind; und

Fig. 3: eine schematische Darstellung einer weiteren Komponente, bei der gemäß dem Verfahren bestimmt wurde, ob Fehlausbildungen im Material einer keramischen Komponente vorhanden sind.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

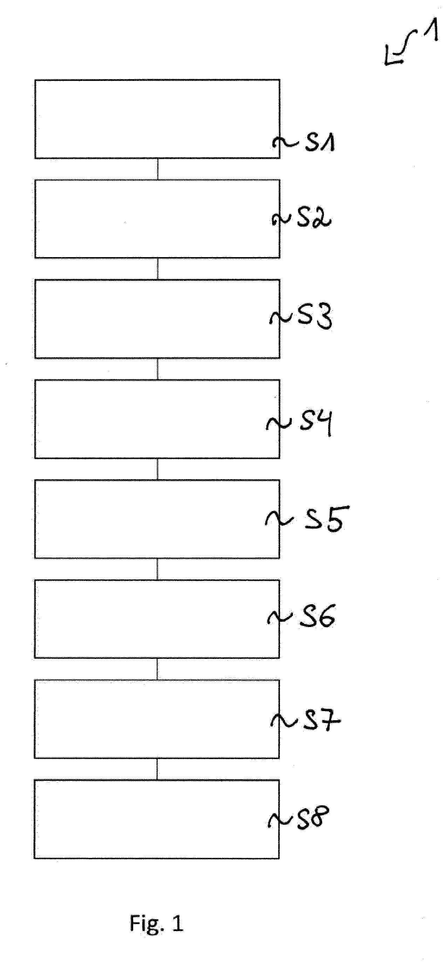

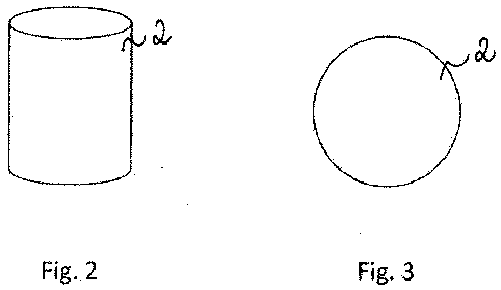

Fig. 1 zeigt ein Verfahren 1 zur Bestimmung, ob Fehlausbildungen im Material einer keramischen Komponente 2 (Fig. 2, 3) vorhanden sind. Dazu wird in einem ersten Schritt S1 eine Temperaturdifferenz zwischen einer ersten Temperatur und einer zweiten Temperatur auf Basis eines Einsatzzwecks der Komponente 2 ermittelt. Beispielsweise kann die Temperaturdifferenz auf Basis einer minimalen Risszähigkeit ermittelt. Bei der minimalen Risszähigkeit kann es sich beispielsweise um einen von einem Benutzer oder Anwender vorgegebenen Wert handeln, den die Komponente aufweisen soll, um den Einsatzzweck zu erfüllen. Eine minimale Risszähigkeit kann dabei beispielsweise basierend auf Erfahrungswerten, Versuchen oder dergleichen bestimmt werden.

In einem Schritt S2 wird die Komponente 2 auf eine erste Temperatur temperiert und anschließend wird in einem weiteren Schritt S3 die Komponente 2 auf eine zweite Temperatur temperiert. Bei manchen Ausführungsbeispielen kann die Komponente so lange auf die erste Temperatur erwärmt werden, bis der erwärmte Bereich oder die ganze Komponente homogen die erste Temperatur aufweist. Anschließend kann die Komponente rasch abgekühlt werden. Bei manchen Ausführungsbeispielen können dadurch einfache geometrische Rahmenbedingungen für die Berechnung der Temperaturdifferenz erreicht werden. Alternativ kann die Einstellung einer konstanten bzw. homogenen ersten Temperatur in der zu prüfenden Komponente entfallen. Es kann beispielsweise nur die Oberfläche oder eine Randschicht auf die erste Temperatur erwärmt und anschließend rasch abgekühlt werden.

Bei Ausführungsbeispielen, bei denen die Thermoschockbehandlung aus einem raschen Aufheizen besteht, also die erste Temperatur kleiner ist als die zweite Temperatur, kann ebenfalls eine homogene Temperierung der Komponenten oder nur ein Temperieren der Randschichten ausgeführt werden. Ein rasches Aufheizen kann beispielsweise bei Komponenten gewählt werden, bei denen in einem Betrieb innenliegende Zugspannungen auftreten können, die in einem äußeren Bereich zu Druckspannungen führen können. Bei Komponenten, bei denen nur eine im Einsatz speziell beanspruchte Stelle zu prüfen ist, kann eventuell auch nur diese Stelle der Komponente mit der ersten Temperatur und dann der zweiten Temperatur temperiert werden. Beispielsweise kann ein bereichsweises rasches Aufheizen mit einem leistungsstarken Laser erfolgen.

Im Anschluss an den Schritt S3 wird in einem Schritt S4 eine Resonanz-Ultraschallspektroskopie der Komponente durchgeführt und in einem Schritt S5 ein Ultraschallspektrums der Komponente erfasst, wobei die Materialeigenschaften der Komponente 2 bestimmt werden, die die Elastizität betreffen. Bei der Resonanz-Ultraschallspektroskopie können die Eigenfrequenzen, mit den die Komponente 2 schwingt, wenn sie mechanisch angeregt wird, bestimmt werden. Die Eigenfrequenz hängt von der Elastizität, der Größe und der Form der Komponente 2 ab. Um die Resonanz-Ultraschallspektroskopie durchzuführen, wird die Komponente 2 zwischen eine Ultraschallwellen erzeugende Vorrichtung, die dazu ausgebildet ist, eine elastische Welle mit variierender Frequenz zu erzeugen, und eine Ultraschallwellen detektierende Vorrichtung gehalten, die dazu ausgebildet ist, die Resonanzen der Komponente 2 zu erfassen. Als Ultraschallwellen erzeugende Vorrichtung und/oder als Ultraschallwellen detektierende Vorrichtung kann beispielsweise ein piezoelektrischer Wandler eingesetzt werden. Es ist aber auch möglich eine andere Detektionsvorrichtung zur Erfassung der Eigenfrequenzen einzusetzen, wie beispielsweise einen Laser. Beispielsweise kann die Resonanz-Ultraschallspektroskopie beim Verfahren 1 in einem Frequenzbereich zwischen 100kHZ und 100MHz durchgeführt werden.

Während ein Frequenzbereich durchlaufen wird, wird eine Folge von Resonanzspitzen aufgezeichnet. Die Position dieser Spitzen liegt bei den Eigenfrequenzen der Komponente 2, wobei die elastischen Konstanten aus den Eigenfrequenzen bestimmt werden können. In einem Schritt S6 wird das erfasste Ultraschallspektrums ausgewertet, wobei beispielsweise die Eigenfrequenzen der Komponente 2 aus dem erfassten Spektrum ermittelt werden können. Ferner kann aus dem erfassten Ultraschallspektrums zumindest eine elastische Materialkonstante der Komponente 2 bestimmt werden. Dazu können die, bei der Resonanz-Ultraschallspektroskopie ermittelten Eigenfrequenzen der Komponente 2 verwendet werden, um zusammen mit den bekannten geometrischen Parametern der Komponente 2 die zumindest eine elastische Materialkonstante der Komponente zu ermitteln. Beispielsweise kann die bestimmte elastische Materialkonstante das Elastizitätsmodul und/oder die Poissonzahl sein.

Im nächsten Schritt S7 wird das ausgewertete Ultraschallspektrums mit einem Referenzspektrum vergleichen. Das Referenzspektrum kann zum Beispiel basierend auf einer Geometrie und/oder Größe der Komponente 2 und aus zumindest einer elastischen Konstante eines Materials der Komponente 2 bestimmt werden, indem die Eigenfrequenzen der Komponente 2 berechnet werden. Dabei kann insbesondere die zumindest eine elastische Konstante des Materials das Elastizitätsmodul und/oder die Poissonzahl sein. Vorteilhafterweise kann, indem das Referenzspektrums berechnet wird, angenommen werden, dass keine Fehlausbildungen im Material vorliegen, so dass das Referenzspektrum ein Spektrum einer Komponente ohne Fehlausbildungen darstellt.

Aus dem in Schritt S7 erhaltenen Vergleich kann in einem Schritt S3 bestimmt werden, ob Fehlausbildungen im Material der Komponente 2 vorhanden sind. Insbesondere kann durch ein Abweichen der bestimmten elastischen Materialkonstante von der zu erwartenden elastischen Materialkonstante darauf geschlossen werden, dass Fehlausbildungen im Material der Komponente 2 vorliegen. Ferner kann die Komponente 2 auch auf ihre Einsatztauglichkeit überprüft werden, wobei die Komponente als einsatztauglich betrachtet wird, wenn Abweichungen zwischen dem erfassten Ultraschallspektrum und dem Referenzspektrum kleiner sind als ein vorgegebener Grenzwert. Alternativ oder zusätzlich kann durch das Verfahren oder durch den Einsatz von Komponenten, die mit dem Verfahren geprüft wurden, zumindest die Gefahr, dass ein Versagen eintritt, reduziert werden. Beispielsweise kann die Komponente 2 als einsatztauglich angesehen werden, wenn das bestimmte Elastizitätsmodul der Komponente weniger als 5%, bevorzugt weniger als 2 %, noch bevorzugter weniger als 1 %, von dem erwarteten Elastizitätsmodul abweicht.

Das Verfahren kann sich beispielsweise dazu eigenen, in einer laufenden Produktion eingesetzt zu werden. Hierfür kann vorgesehen sein, dass die Komponente 2 in einem Ofen im Durchlauf auf die erste Temperatur erwärmt wird. Dazu kann beispielsweise ein Fördermittel vorgesehen sein, mit dem die Komponente 2 durch den Ofen transportiert wird. Anschließend kann die keramische Komponente 2 mit dem Fördermittel zu einem Abschreckmittel geführt werden, um auf die zweite Temperatur temperiert zu werden. Als Abschreckmittel eignet sich zum Beispiel eine Flüssigkeit, beispielsweise Wasser oder Öl. Des Weiteren kann als Abschreckmittel auch ein Gas eingesetzt werden. Bei einer Abschreckung mit Gas kann das Gas mit erhöhtem Druck auf den Körper geführt werden, zum Beispiel mit einem Druck von 2 bar oder mehr. Bei anderen Ausführungsbeispielen kann die Komponente in dem ersten Vorgang 2 auch bereichsweise oder vollständig mit einem Gasbrenner erwärmt und anschließend in dem zweiten Vorgang 3 mit einem Luftjet abgekühlt werden.

Wird die keramische Komponente 2 mit einem Fördermittel zu der Flüssigkeit als Abschreckmittel geführt, können die Komponenten in das Flüssigkeit fallen gelassen werden, um die Thermoschockbehandlung zu erreichen. Die Flüssigkeit weist dabei die zweite Temperatur auf. Alternativ kann die Komponente auch in die Flüssigkeit getaucht werden.

Alternativ oder zusätzlich kann das Temperieren auf die erste und die zweite Temperatur in einer einzelnen Vorrichtung durchgeführt werden, beispielsweise wenn mit einem Gas für eine Abschreckung von einer ersten Temperatur gearbeitet wird. Eventuell kann dazu eine kombinierte Erwärmungs- und Abschreckanlage eingesetzt werden. Ein Beispiel hierfür ist die Erwärmung in einem Vakuumhärteaggregat, in Luft und/oder in einem Schutzgas, wobei bei der Erwärmung mit oder ohne Vakuum gearbeitet werden kann, eventuell eine mit anschließender Hochdruckgasabschreckung.

Bei manchen Ausführungsbeispielen kann bei dem Temperieren ein inhomogenes Temperaturfeld an und/oder in der Komponente eingestellt werden. Bei manchen Ausführungsbeispielen kann sich dadurch, ein rasches Erwärmen der Komponente in Kombination mit einem raschen Abkühlen erreicht werden. Die Thermoschockbehandlung kann sich auf eine oberflächennahe Zone der Komponente oder die gesamte Komponente beziehen. Möglich ist es dabei auch, dass die Thermoschockbehandlung in einem Bereich durchgeführt wird, in welchem eine maximale Belastung der Komponente im Einsatz gegeben ist. Es können unter Umständen auch Kanten eines Körpers der Thermoschockbehandlung unterworfen werden.

Die Fig. 2 und 3 zeigen schematische Darstellungen von Komponenten 2 die mit dem Verfahren 1 untersucht wurden. Bei der Komponente 2 der Fig. 2 handelt es sich um eine Zylinderrolle und bei der Komponente 2 der Fig. 3 um eine Kugel. Die Komponenten 2 können zum Beispiel als Wälzkörper dienen. Die Komponenten 2 weisen als keramisches Material wenigsten einen der Werkstoffe $Si_3N_4$, SiAlON, SiC, $Al_2O_3$, $ZrO_2$, ZTA oder ATZ auf.

Mit dem Verfahren 1 können aber auch alle möglichen anderen beispielsweise keramische Komponenten geprüft werden. Es kann sich dabei beispielsweise um Komponenten handeln, die in Wälz-, Roll- oder Gleitanwendungen verbaut werden. Hierfür werden die Komponenten wie beschrieben, einer Prüfung mittels Thermoschock unterzogen und anschließend beispielsweise mit Risseindringfarbe beaufschlagt werden, um überkritisch lange Risse zu detektieren und damit schadhafte bzw. nicht einsatztaugliche Komponenten ausscheiden zu können.

Zusammenfassend ermöglicht der Einsatz der Resonanz-Ultraschallspektroskopie zu bestimmen, ob Fehlausbildungen im Material einer keramischen Komponente vorhanden sind, auch wenn diese sich nicht an einer Oberfläche der Komponente darstellen und somit nicht direkt nachweisbar sind.

**Bezugszeichenliste**

| | |
|---|---|
| 1 | Verfahren |
| 2 | Komponente |
| S1 -S8 | Verfahrensschritte |

**Patentansprüche**

1. Verfahren (1) zur Bestimmung, ob Fehlausbildungen im Material einer keramischen Komponente (2) vorhanden sind, wobei das Verfahren die folgenden Schritte aufweist:

   Ermitteln (S1) einer Temperaturdifferenz zwischen einer ersten Temperatur und einer zweiten Temperatur auf Basis eines Einsatzzwecks der Komponente (2),
   Temperieren (S2) der Komponente (2) auf eine erste Temperatur;
   Temperieren (S3) der Komponente (2) auf eine zweite Temperatur;
   Durchführen (S4) einer Resonanz-Ultraschallspektroskopie der Komponente (2) nach dem Temperieren auf die zweite Temperatur,
   Erfassen(S5) eines Ultraschallspektrums der Komponente (2),
   Auswerten (S6) des erfassten Ultraschallspektrums,
   Vergleichen (S7) des ausgewerteten Ultraschallspektrums mit einem Referenzspektrum, und
   Bestimmen (S8) aus dem Vergleich, ob Fehlausbildungen im Material der Komponente (2) vorhanden sind.

2. Verfahren nach Anspruch 1, wobei die Fehlausbildungen im Material Poren, Risse und/oder Materialeinschlüsse sind.

3. Verfahren nach einem der vorherigen Ansprüche, wobei das Verfahren ferner ein Bestimmen der Temperaturdifferenz auf Basis einer minimalen Risszähigkeit umfasst, wobei die minimale Risszähigkeit ein von einem Benutzer oder Anwender vorgegebener Wert ist, den die Komponente (2) aufweisen soll, um den Einsatzzweck zu erfüllen.

4. Verfahren nach einem der vorherigen Ansprüche, wobei das Referenzspektrum basierend auf einer Geometrie und/oder Größe der Komponente (2) und aus zumindest einer elastischen Konstante eines Materials der Komponente (2) bestimmt wird.

5. Verfahren nach Anspruch 4, wobei die zumindest eine elastische Konstante des Materials das Elastizitätsmodul und/oder die Poissonzahl ist.

6. Verfahren nach einem der vorherigen Ansprüche, wobei das Auswerten des erfassten Ultraschallspektrums ein Bestimmen zumindest einer elastischen Materialkonstante der Komponente (2) umfasst.

7. Verfahren nach Anspruch 6, wobei die bestimmte elastische Materialkonstante das Elastizitätsmodul und/oder die Poissonzahl ist.

8. Verfahren nach einem der vorherigen Ansprüche, wobei das Verfahren ferner ein Überprüfen der Komponente (2) auf ihre Einsatztauglichkeit umfasst, wobei die Komponente (2) als einsatztauglich betrachtet wird, wenn Abweichungen zwischen dem erfassten Ultraschallspektrum und dem Referenzspektrum kleiner sind als ein vorgegebener Grenzwert.

9. Verfahren nach Anspruch 8, wobei die Komponente (2) als einsatztauglich angesehen wird, wenn das bestimmte Elastizitätsmodul der Komponente (2) weniger als 5%, bevorzugt weniger als 2 %, noch bevorzugter weniger als 1 %, von dem erwarteten Elastizitätsmodul abweicht.

10. Verfahren nach einem der vorherigen Ansprüche, wobei die Resonanz-Ultraschallspektroskopie in einem Frequenzbereich zwischen 100kHZ und 100MHz durchgeführt wird.

Fig. 1

Fig. 2

Fig. 3

Europäisches
Patentamt

European
Patent Office

Office européen
des brevets

# EUROPÄISCHER RECHERCHENBERICHT

**Nummer der Anmeldung**

**EP 23 19 0037**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 655 623 A1 (QUATRO CORP [US]) 31. Mai 1995 (1995-05-31) * das ganze Dokument * ----- | 1-10 | INV. G01N29/22 G01N29/12 G01N29/24 |
| Y | US 2017/219505 A1 (SCHOEPPL OSKAR [AT]) 3. August 2017 (2017-08-03) * das ganze Dokument * ----- | 1-10 | G01N29/46 G01N29/44 G01N29/34 |
| Y | WO 2013/162521 A1 (APPLE INC [US]; PREST CHRISTOPHER D [US] ET AL.) 31. Oktober 2013 (2013-10-31) * das ganze Dokument * ----- | 6,7,9,10 | |

**RECHERCHIERTE SACHGEBIETE (IPC)**

**G01N**

Der vorliegende Recherchenbericht wurde für alle Patentansprüche erstellt

| Recherchenort | Abschlußdatum der Recherche | Prüfer |
|---|---|---|
| **München** | **25. Januar 2024** | **Roetsch, Patrice** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 0037

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2024

| Im Recherchenbericht angeführtes Patentdokument | Datum der Veröffentlichung | Mitglied(er) der Patentfamilie | Datum der Veröffentlichung |
|---|---|---|---|
| EP 0655623 A1 | 31-05-1995 | AT E189524 T1 | 15-02-2000 |
|  |  | DE 69422891 T2 | 12-10-2000 |
|  |  | DK 0655623 T3 | 01-05-2000 |
|  |  | EP 0655623 A1 | 31-05-1995 |
|  |  | US 5425272 A | 20-06-1995 |
| US 2017219505 A1 | 03-08-2017 | DE 102016201647 A1 | 03-08-2017 |
|  |  | EP 3203208 A2 | 09-08-2017 |
|  |  | US 2017219505 A1 | 03-08-2017 |
| WO 2013162521 A1 | 31-10-2013 | US 2015300993 A1 | 22-10-2015 |
|  |  | WO 2013162521 A1 | 31-10-2013 |

EPO FORM P0461

Für nähere Einzelheiten zu diesem Anhang : siehe Amtsblatt des Europäischen Patentamts, Nr.12/82